# EUROPEAN PATENT SPECIFICATION

(11) **EP 3 428 447 B1**
(45) Date of publication and mention of the grant of the patent: **30.12.2020**
(21) Application number: 17382446.7
(22) Date of filing: 10.07.2017
(51) Int. Cl.: F03D 13/20, E04B 1/04, E04H 12/34, E04H 12/12, F03D 13/10, E04B 1/41

(54) **PRE-ASSEMBLY SLAB SYSTEM FOR CONCRETE WIND TURBINE TOWERS AND METHOD FOR ASSEMBLING A PRE-ASSEMBLY SLAB SYSTEM FOR CONCRETE WIND TURBINE TOWERS**
VORMONTIERTES PLATTENSYSTEM FÜR WINDTURBINENBETONTÜRME UND VERFAHREN ZUR MONTAGE EINES VORMONTIERTEN PLATTENSYSTEMS FÜR WINDTURBINENBETONTÜRME
SYSTÈME DE DALLE DE PRÉMONTAGE POUR TOURS D'ÉOLIENNE EN BÉTON ET PROCÉDÉ D'ASSEMBLAGE D'UN SYSTÈME DE DALLE DE PRÉMONTAGE POUR TOURS D'ÉOLIENNE EN BÉTON

(43) Date of publication of application: 16.01.2019
(73) Proprietor: Nordex Energy Spain, S.A., 31395 Barasoain Navarra (ES)
(72) Inventor: GÓMEZ ANDUEZA, Asier, 31395 Barasoain (ES); CERRILLO GÓMEZ, Vanesa, 31395 Barasoain (ES); GARCÍA MAESTRE, Iván, 31395 Barasoain (ES); ARLABÁN GABEIRAS, Teresa, 31395 Barasoain (ES); GASTÓN LUJAMBIO, Ander, 31395 Barasoain (ES); ARÍSTEGUI LANTERO, José Luis, 31395 Barasoain (ES); GARCÍA SAYÉS, José Miguel, 31395 Barasoain (ES); NUÑEZ POLO, Miguel, 31395 Barasoain (ES)
(74) Representative: Pons

(56) References cited:
- EP-A1- 1 645 693
- EP-A1- 2 980 337
- WO-A1-2016/066345
- AT-B- 405 067
- DE-U1- 7 624 523
- US-A1- 2011 194 900

## Description

### SUBJECT MATTER OF THE INVENTION

The present invention relates to a pre-assembly slab system for concrete wind turbine towers, wherein the pre-assembly slabs can be transported to the vicinity of the tower of another wind turbine in the same wind farm or in another wind farm and be reused for the assembly of this other tower.

The invention further relates to a method for assembling the pre-assembly slab system for concrete wind turbine towers.

### BACKGROUND OF THE INVENTION

Usually, the pre-assembly of the different sections of a concrete wind turbine tower is carried out in the vicinity of the foundation of said tower.

In order to implement said pre-assembly, metallic assembly platforms are placed on one or several concrete slabs that are manufactured in-situ as part of the civil works destined to the adaptation of the vicinity of the wind farm and carried out prior to the installation of the wind turbines.

Subsequently, in order to implement the pre-assembly of the different concrete tower sections, the pre-assembly of complete sections can be carried out by joining segments, executing the vertical joints between them on the ground in the vicinity of the base of the tower and later assembling the sections on top of each other. Said method greatly facilitates the assembly of the tower, by carrying out most of the operations on the ground. This is the procedure protected by patent US7765766B2. Said assembly procedure comprises two stages:
▪ A stage for the pre-assembly of sections, in which the segments that form a section are assembled at the base of the tower and the vertical concrete joints are executed between segments, and
▪ A hoisting and stacking stage in which the already pre-assembled sections are placed one on top of the other.

The present invention solves the previous drawbacks associated with concrete slabs, which are manufactured in-situ as part of the civil works for the adaptation of the vicinity of the wind farm and carried out prior to the installation of the wind turbines.

Document WO 2016/066345 A1 discloses a pre-assembly slab system for concrete wind turbine towers, wherein the concrete tower comprises at least two sections and wherein each of the sections comprises at least two segments, wherein the system comprises at least one pre-assembly slab of at least one concrete tower section configured to support and transmit to the ground the stresses associated with at least one concrete tower section, wherein the at least one pre-assembly slab is prefabricated, modular and comprising at least two modules. This document discloses a pre-assembly slab system according to the preamble of claim 1.

### DESCRIPTION OF THE INVENTION

The present invention relates to a pre-assembly slab system for concrete wind turbine towers wherein the concrete tower comprises at least two sections and wherein each of the sections comprises at least two segments.

The pre-assembly slab system comprises at least one pre-assembly slab of at least one concrete tower section configured to support and transmit to the ground the stresses associated with at least one concrete tower section, wherein the at least one pre-assembly slab is prefabricated.

Thus, it is possible to transport the pre-assembly slab system to the vicinity of the tower of another wind turbine of the same wind farm or of another wind farm and reuse the slab system for the assembly of this other tower, since at least one prefabricated pre-assembly slab is configured to be transported.

Preferably, the at least one pre-assembly slab of the pre-assembly slab system is made of concrete, preferably comprising a reinforcement.

Preferably, the at least one pre-assembly slab of the pre-assembly slab system is annular, such that by eliminating the central area with respect to the slabs of the state of the art manufactured in-situ, the amount of material used in the manufacturing thereof is reduced.

Each of the pre-assembly slabs comprises first fastening elements configured to allow the pre-assembly slab to be hoisted as whole, preferably configured to hold the pre-assembly slab in a horizontal position during hoisting.

Optionally, the at least one pre-assembly slab of the pre-assembly slab system is modular, comprising at least two modules.

Thus, since the at least one pre-assembly slab is modular, the size of each of the at least two modules of the at least one pre-assembly slab is smaller than the size of said pre-assembly slab, which enables transporting the modules by road or rail, such that it is possible to reuse the slab system for the assembly of another tower of another wind turbine.

In case the at least one pre-assembly slab is modular, said pre-assembly slab optionally comprises a joining means between the modules to provide mechanical integrity to the pre-assembly slab so that it can be hoisted in a single stage for transportation to another location. This enables hoisting and transporting the pre-assembly slab to another wind turbine tower inside the same wind farm since there are fewer transport restrictions in terms of dimensions and weights carried on wind farm roads with respect to existing restrictions for transport by road or rail.

Optionally, each of the pre-assembly slabs comprises second fastening elements configured to enable separate hoisting of each of the modules of the pre-assembly slab, preferably configured to hold each of the modules in a horizontal position during hoisting.

Thus, when the pre-assembly slabs are transported prior to the construction of a wind farm from another wind farm or from a logistic center, they are disassembled, i.e., they are transported by modules, allowing the dimensions of said modules not to exceed the maximum allowed dimensions for transportation by road or rail. Due to the second fastening elements, each module of a pre-assembly slab is hoisted and arranged in the vicinity of the foundation of the concrete tower of the wind turbine, the modules being subsequently joined together by means of the joining means between the modules. These operations are repeated for each of the pre-assembly slabs of the pre-assembly slab system for concrete wind turbine towers.

Once the assembly of the concrete tower of a wind turbine has been completed, the slab system is transported to the location of the concrete tower of another wind turbine, transporting the complete pre-assembly slabs, i.e., all of its modules joined together by means of the joining means between modules, wherein, due to the first fastening elements, each of the pre-assembly slabs is hoisted and arranged in the vicinity of the concrete tower of the wind turbine, thus reducing hoist and transportation operations for the construction of the wind farm.

Optionally, the slab system comprises at most as many pre-assembly slabs as concrete tower sections are comprised in the concrete tower. In the event that each concrete tower section is assembled on a pre-assembly slab, the slab system comprises at least as many pre-assembly slabs as concrete tower sections less one unit comprised in the concrete tower, since the first concrete tower section is assembled directly on a foundation of the wind turbine concrete tower. In the event that the sections are pre-assembled concentrically in the pre-assembly slabs, such that at least two sections of the concrete tower are pre-assembled on a pre-assembly slab simultaneously, the pre-assembly slab system comprises fewer pre-assembly slabs than concrete tower sections. In the event that the tower is mixed, i.e., with part of the sections being concrete and another part being metallic, for example, the pre-assembly slab system comprises less pre-assembly slabs than tower sections.

The size and amount of material of each of the pre-assembly slabs is adapted according to the geometry and weight of the tower sections arranged on the pre-assembly slabs which support and transmit to the ground the stresses associated with at least one concrete tower section. This way, and since the wind turbine towers are usually decreasing in diameter with respect to height, for a system of pre-assembly slabs with at least two pre-assembly slabs, a pre-assembly slab of a section that is closer to the base of the tower will have a larger outer perimeter and a larger contact surface with the ground than a pre-assembly slab of an upper section.

Preferably, the pre-assembly slab system for concrete wind turbine towers comprises at least two pre-assembly slabs of at least two different dimensions. It is especially advantageous that the outer size and the surface of the slabs are adapted according to the perimeter of the sections to be assembled. Thus, the amount of material used in the manufacture of the slab system is optimized according to the dimensions of the sections. For example, in a frustoconical tower, the sections closest to the base have a larger perimeter than the sections that are further away from the base. In this case, it is advantageous if the slabs configured for pre-assembly of the sections closest to the base have a larger outer perimeter and preferably a larger surface area than the slabs configured for pre-assembly of the sections further away from the base of the tower.

Preferably, each of the pre-assembly slabs comprises a constant thickness.

According to the invention, the thickness is less in a first pre-assembly slab with a greater contact surface with the ground, i.e., in a first pre-assembly slab configured to support and transmit to the ground the stresses associated with a first tower section closer to the base of the tower, than the thickness of a second pre-assembly slab with a smaller contact surface with the ground, i.e., in a second pre-assembly slab configured to support and transmit to the ground the stresses associated with a second tower section further away from the base of the tower than the first tower section. This is particularly beneficial in the case of frustoconical towers, in which the perimeter of a first tower section closer to the base of the tower is larger than the perimeter of a second tower section further away from the base of the tower than the first tower section.

Optionally, the pre-assembly slab system of the present invention further comprises support elements of the concrete tower sections configured to be arranged on each of the pre-assembly slabs

Preferably, the support elements are removable. In this case, each of the pre-assembly slabs comprises third fastening elements configured to anchor said support elements, wherein, optionally, the fastening elements are embedded in the pre-assembly slabs.

The method for assembling the pre-assembly slab system for concrete wind turbine towers, wherein the concrete tower comprises at least two sections and wherein each of the sections comprises at least two segments, comprises:
- a stage for precasting at least the first pre-assembly slab and the second pre-assembly slab each of them being configured to support and transmit to the ground the stresses associated with at least one concrete tower section of the at least two tower sections. Preferably, the stage for precasting at least one pre-assembly slab of at least one concrete tower section comprises the following substages:
   - a substage for assembling at least one mold, which in turn comprises:
      ∘ at least one substage for assembling a reinforcement; and
   - a substage for pouring the material of the pre-assembly slab into the at least one mold, the pre-assembly slab material being preferably concrete.

The method further comprises a stage for assembling the pre-assembly slab system in the vicinity of the wind turbine tower.

The method further comprises a first stage for transporting the pre-assembly slab system to the vicinity of the tower of another wind turbine of the same wind farm or of another wind farm, which enables reusing the slab system for the assembly of this other tower, since at least one prefabricated pre-assembly slab is configured to be transported.

Preferably, the stage for precasting the at least one pre-assembly slab of the pre-assembly slab system is a stage for precasting by means of concrete laying, preferably by means of concrete laying with a reinforcement.

The stage for assembling the pre-assembly slab system in the vicinity of the wind turbine tower in turn comprises:
- a substage for hoisting carried out by means of hoisting means of the at least pre-assembly slab of the pre-assembly slab system.

Preferably, the substage for hoisting of the stage for assembling is a substage for hoisting the at least one pre-assembly slab of the pre-assembly slab system in a horizontal position.

Optionally, the stage for precasting the at least one pre-assembly slab of at least one concrete tower section, the at least one pre-assembly slab being modular and comprising at least two modules, is carried out for each of the modules.

In this exemplary embodiment, the substage for hoisting carried out by means of hoisting means of the at least one pre-assembly slab of the slab system, of the stage for assembling, comprises a substage for hoisting carried out by means of hoisting means for each of the modules of the at least one pre-assembly slab, the substage for hoisting preferably being a substage for hoisting at least one of the modules of the at least one pre-assembly slab of the pre-assembly slab system in a horizontal position.

In this exemplary embodiment, the stage for assembling the pre-assembly slab system in the vicinity of the wind turbine tower in turn comprises a stage for joining the modules of the at least one pre-assembly slab by means of joining means between the modules.

The stage for assembling is carried out for each of the pre-assembly slabs of the pre-assembly slab system for concrete wind turbine towers in the method of the present invention.

The method further comprises a second stage for transporting the pre-assembly slab system prior to the stage for assembling the pre-assembly slab system in the vicinity of the wind turbine tower, wherein this second stage for transporting is a stage for transporting at least one pre-assembly slab by modules. This is possible because the dimensions of said modules are smaller than those of the pre-assembly slab and do not exceed the maximum dimensions allowed for transportation by road or rail.

The method further comprises a stage for hoisting carried out by means of hoisting means, of at least one pre-assembly slab of the slab system, prior to the first stage for transporting the pre-assembly slab system to the vicinity of the tower of another wind turbine of the same wind farm or of another wind farm.

Preferably, the stage for hoisting is a stage for hoisting the at least one pre-assembly slab of the pre-assembly slab system in a horizontal position.

Optionally, the stage for assembling the pre-assembly slab system in the vicinity of the wind turbine tower in turn comprises a substage for positioning support elements on the concrete tower sections that are arranged on each of the pre-assembly slabs.

The present invention also relates to a method for assembling a concrete wind tower comprising the stage for precasting the at least one pre-assembly slab of at least one concrete tower section, the stage for assembling the slab system in the vicinity of the wind turbine tower, and also the following stages:
- a stage for placing and positioning at least one subset of a tower section formed by at least two segments on the at least one pre-assembly slab;
- a stage for provisional or definite execution of the joints between segments of at least one subset of the tower section by joining at least two segments; and
- a stage for stacking the at least one subset of the tower section onto an immediately lower tower section.

The present invention also relates to a method for assembling a wind farm comprising the stage for precasting the at least one pre-assembly slab of at least one concrete tower section, at least one stage for assembling the slab system in the vicinity of the wind turbine tower and at least a first stage for transporting the pre-assembly slab system to the vicinity of the tower of another wind turbine of the same wind farm.

The method for assembling a wind farm further comprises the following stages for each of the wind turbine towers of the wind farm:
- a stage for placing and positioning at least one subset of a tower section formed by at least two segments on the at least one pre-assembly slab;
- a stage for provisional or definite execution of the joints between segments of at least one subset of the tower section by joining at least two segments; and
- a stage for stacking at least one subset of the tower section onto an immediately lower tower section.

### BRIEF DESCRIPTION OF THE DRAWINGS

Figure 1 shows a plan view of the pre-assembly slab system for concrete wind turbine towers of the present invention with 5 pre-assembly slabs for as many tower sections.
Figure 2 shows a plan view of the pre-assembly slab of the pre-assembly slab system corresponding to the third section of the tower.
Figure 3 shows an AA cross-section view of Figure 2.

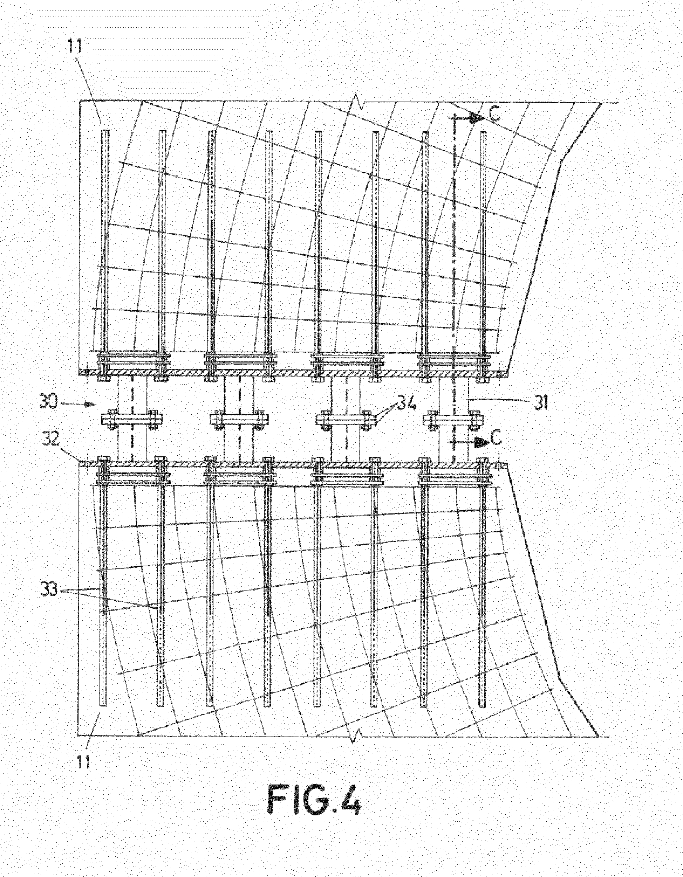

Figure 4 shows detail B of Figure 2.

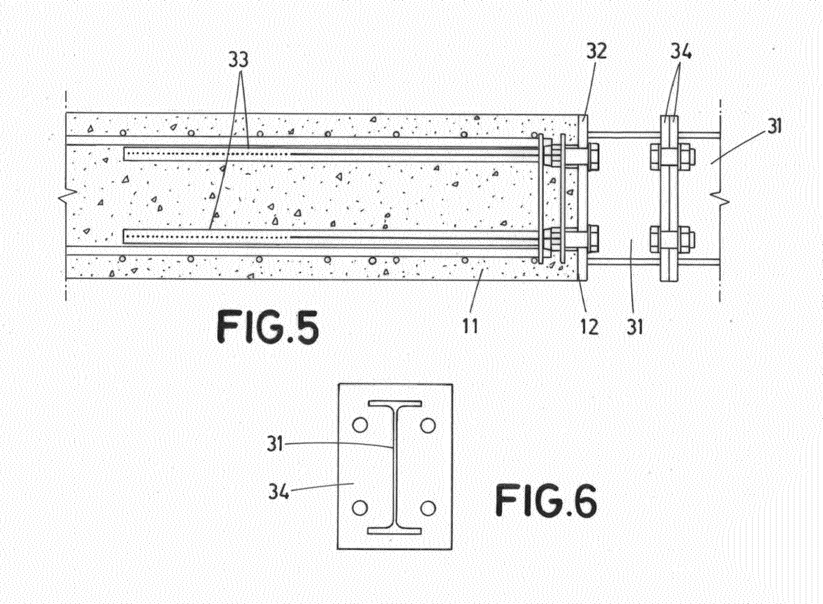

Figure 5 shows a CC cross-section view of Figure 4 wherein the joining means between modules can be seen.
Figure 6 shows a GG cross-section view of Figure 5.

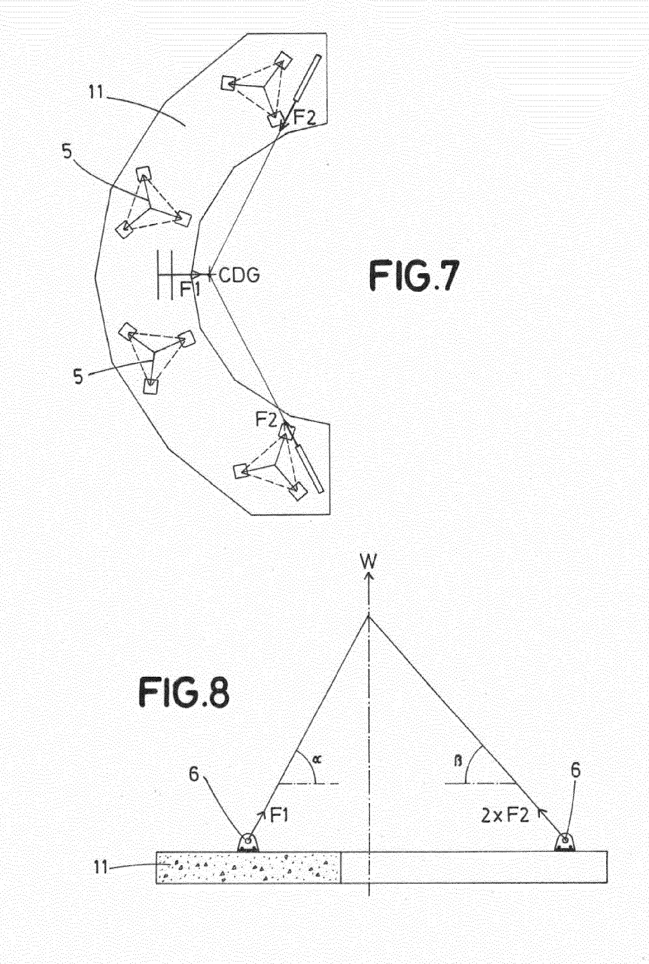

Figure 7 shows a plan view of one of the two modules of a pre-assembly slab, wherein the force diagram is represented supported by the second fastening elements, with stress F1 in the center of the module and two F2 stresses at the ends of the modules, stresses F1 and F2 converging at the center of gravity CDG, from which the hoisting is carried out with a resulting stress of W, shown in Figure 8.
Figure 8 shows an elevation view of Figure 7, wherein angle α forming the horizontal with stress F1 and angle β forming the horizontal with stresses F2 can be seen.

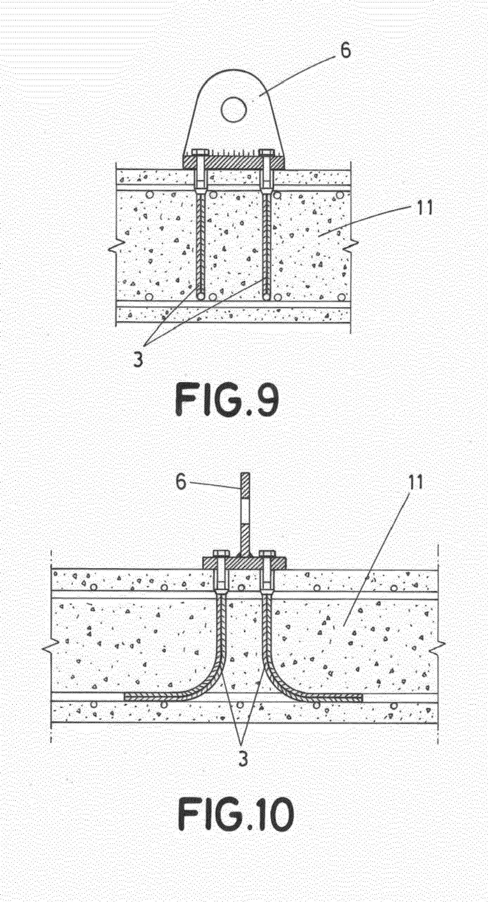

Figure 9 shows an elevation sectional view of a first or a second fastening element shown in Figure 7.
Figure 10 shows a sectional side view of the first or the second fastening element shown in Figure 7.
Figure 11 shows a plan view of the stage for precasting at least one pre-assembly slab of at least one concrete tower section by means of two molds carried out in one phase.
Figure 12 shows a plan view of the stage for precasting at least one pre-assembly slab of at least one concrete tower section by means of one mold carried out in two phases.

### PREFERRED EMBODIMENT OF THE INVENTION

In a preferred embodiment of the invention, the pre-assembly slab system for concrete wind turbine towers is used to carry out the pre-assembly of at least two sections of the concrete tower, the following example having six tower sections, not considered limiting, wherein each of the sections comprises at least two segments (not shown), wherein the first concrete tower section is assembled directly on a foundation of the concrete wind turbine tower.

The pre-assembly slab system therefore comprises five pre-assembly slabs (10a, 10b, 10c, 10d, 10e), each of which is used for pre-assembling one of the five concrete tower sections, from the second to the fifth, the five slabs (10a, 10b, 10c, 10d, 10e) being pre-assembled and prefabricated, preferably of concrete, preferably comprising a reinforcement (12).

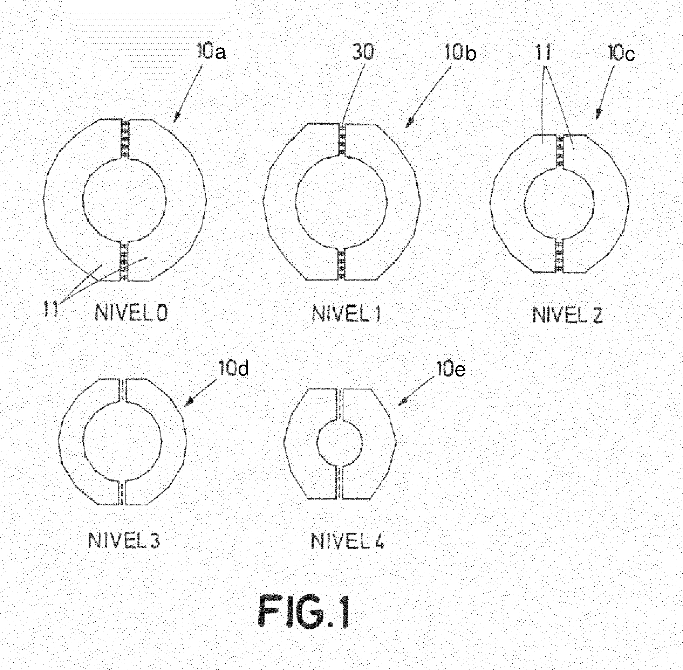

The pre-assembly slabs (10a, 10b, 10c, 10d, 10e) are annular and as shown in Figure 1, the amount of material used in the manufacture thereof by eliminating the central area with respect to the slabs of the state of the art manufactured in-situ.

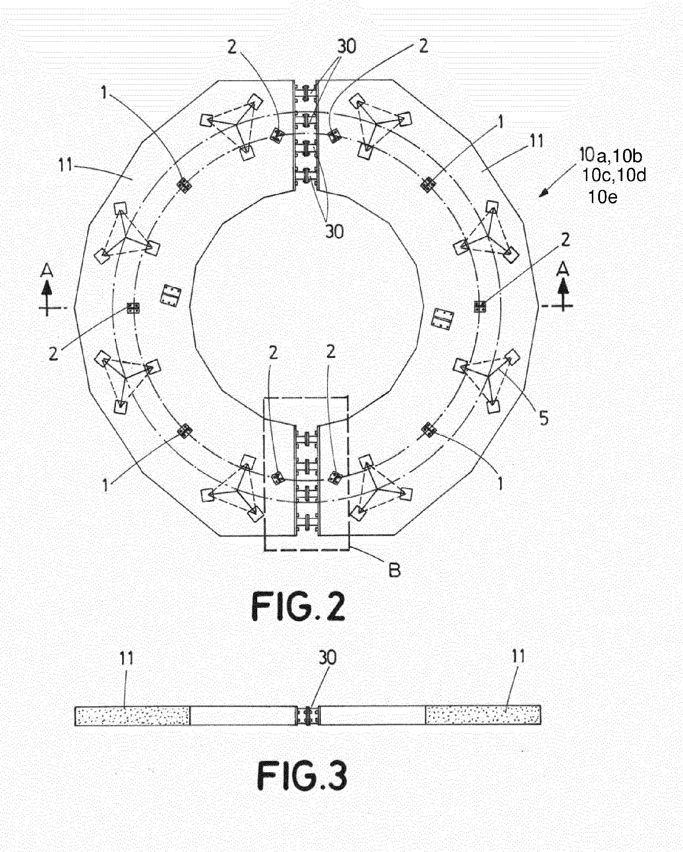

Each of the pre-assembly slabs (10a, 10b, 10c, 10d, 10e) comprises first fastening elements (1) configured to allow the pre-assembly slab (10a, 10b, 10c, 10d, 10e) to be hoisted as whole, by holding the pre-assembly slab (10a, 10b, 10c, 10d, 10e) in a horizontal position. These first fastening elements (1) can be seen in Figure 2 for the pre-assembly slab (10a, 10b, 10c, 10d, 10e) of the fourth section of the tower.

Preferably, the pre-assembly slabs (10a, 10b, 10c, 10d, 10e) of the pre-assembly slab system are modular, each of the pre-assembly slabs (10a, 10b, 10c, 10d, 10e) comprising two modules (11) as shown in Figure 1 although the number of modules (11) of the pre-assembly slabs (1) of the slab system of the present invention may be greater than 2.

Thus, since the pre-assembly slabs (10a, 10b, 10c, 10d, 10e) are modular, the size of each of the modules (11) that make up each pre-assembly slab (10a, 10b, 10c, 10d, 10e) is smaller than the size of said pre-assembly slab (10a, 10b, 10c, 10d, 10e), which enables transporting the modules (11) by road or rail, such that it is possible to reuse the slab system for the assembly of another tower of another wind turbine.

Each pre-assembly slab (10a, 10b, 10c, 10d, 10e) comprises joining means (30) between the modules (11) to provide mechanical integrity to the pre-assembly slab (10a, 10b, 10c, 10d, 10e) so that it can be hoisted in a single stage for transportation thereof to another location. These joining means (30) between the modules (11) comprise joining profiles (31), preferably IPE profiles, and steel sheets (32), wherein the joining profiles (31) are joined to a steel sheet (32) arranged on a joining flank (12) of each of the modules (11), and wherein the steel sheets (32) are joined to the modules (11) through inner bars (33) that are embedded in the module (11) once the concrete has set. The joining means (30) between the modules (11) further comprise central joining plates (34) arranged between two joining profiles (31) of adjacent modules (11) and these joining plates (34) are joined by screws. Thus, it is possible to transport the modules (11) by road or by rail, once the joining means (30) between the modules (11) have been removed.

Each of the pre-assembly slabs (10a, 10b, 10c, 10d, 10e) comprises second fastening elements (2) configured to enable separate hoisting of each of the modules (11) of the pre-assembly slab (10a, 10b, 10c, 10d, 10e), holding each of the modules (11) in a horizontal position.

The first fastening elements (1) and/or the second fastening elements (2) comprise anchors (3) embedded in the pre-assembly slab (10a, 10b, 10c, 10d, 10e) the anchors (3) being preferably Halfen-type inserts or the like. Preferably, the first fastening elements (1) and/or the second fastening elements (2) comprise lugs (6) that enable hoisting the pre-assembly slab (10a, 10b, 10c, 10d, 10e) or each of the modules (11) of the pre-assembly slab (10a, 10b, 10c, 10d, 10e) respectively.

In this preferred embodiment of the invention, the wind turbine tower is formed by sections of decreasing diameter with respect to the height, whereby the pre-assembly slab (10a) of the section closest to the base of the tower, which is the second section of the tower, will have a larger contact surface with the ground and preferably a larger outer perimeter than the pre-assembly slab (10b) of the third section of the tower, and so on up to the pre-assembly slab (10d) of the sixth section of the tower, which will have the smallest contact surface and preferably the smallest outer perimeter of the five pre-assembly slabs (10a, 10b, 10c, 10d, 10e) of the pre-assembly slab system for concrete wind turbine towers of the present invention according to this embodiment. This minimizes the material used in the manufacture of the pre-assembly slabs (10a, 10b, 10c, 10d, 10e).

Each of the pre-assembly slabs (10a, 10b, 10c, 10d, 10e) comprises a constant thickness, wherein the thickness may be less in those pre-assembly slabs with a larger contact surface with the ground, i.e., for example, the thickness is less in the pre-assembly slab (10a) corresponding to the second section of the tower than in the pre-assembly slab (10b) corresponding to the third section of the tower, and so one, up to the pre-assembly slab (10e) corresponding to the sixth section of the tower. This also minimizes the material used in the manufacture of the pre-assembly slabs (10a, 10b, 10c, 10d, 10e). In another example, the thickness is less in the pre-assembly slab (10a) corresponding to the second section of the tower than in the rest of the pre-assembly slabs (10b, 10c, 10d, 10e) corresponding to the third, fourth, fifth and sixth sections of the tower, wherein the thickness is the same.

The pre-assembly slab system further comprises support elements (5) of the sections of the concrete tower, support elements (5) that are configured to be arranged on each of the pre-assembly slabs (10a, 10b, 10c, 10d, 10e) wherein the support elements (5) are preferably tripods.

The method for assembling the pre-assembly slab system for concrete wind turbine towers, wherein the concrete tower comprises at least two sections and wherein each of the sections comprises at least two segments, comprises:
- a stage for precasting at least one pre-assembly slab (10a, 10b, 10c, 10d, 10e) of at least one concrete tower section wherein the at least one pre-assembly slab (10a, 10b, 10c, 10d, 10e) is configured to support and transmit to the ground the stresses associated with at least one concrete tower section.

Preferably, the stage for precasting the at least one pre-assembly slab of the pre-assembly slab system is a stage for precasting by means of concrete laying, preferably by means of concrete laying with a reinforcement.

The method further comprises a stage for assembling the pre-assembly slab system in the vicinity of the wind turbine tower comprising a substage for hoisting, carried out by means of hoisting means, of the at least one pre-assembly slab (10a, 10b, 10c, 10d, 10e) of the slab system, wherein the substage for hoisting is preferably a substage for hoisting the at least one pre-assembly slab (10a, 10b, 10c, 10d, 10e) of the pre-assembly slab system in a horizontal position.

The stage for assembling the pre-assembly slab system in the vicinity of the wind turbine tower in turn comprises a substage for positioning support elements (5) of the concrete tower sections that are arranged on each of the pre-assembly slabs (10a, 10b, 10c, 10d, 10e).

The method further comprises a first stage for transporting the pre-assembly slab system to the vicinity of the tower of another wind turbine of the same wind farm or of another wind farm, which enables reusing the slab system for the assembly of this other tower, since the at least one prefabricated pre-assembly slab (10a, 10b, 10c, 10d, 10e) is configured to be transported.

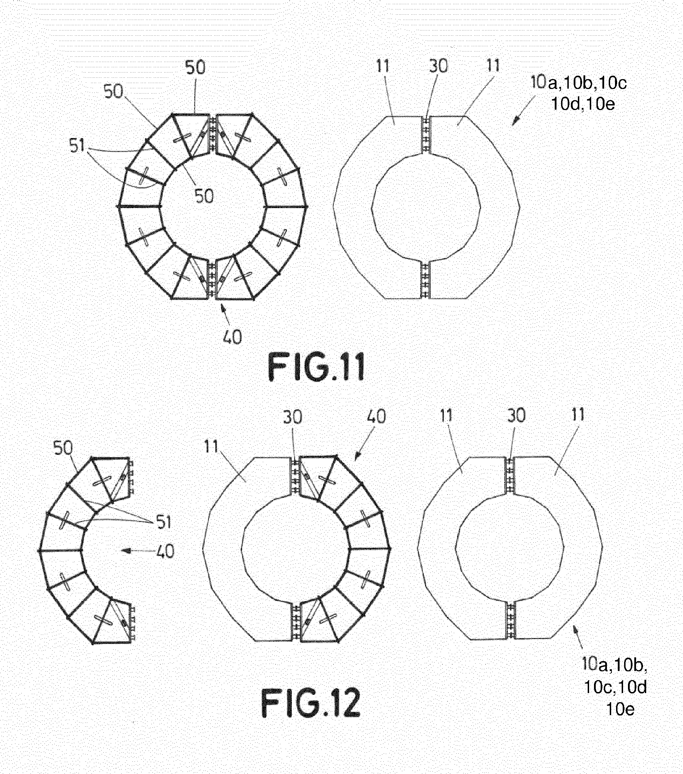

In another preferred embodiment, the stage for precasting the at least one pre-assembly slab (10a, 10b, 10c, 10d, 10e) of at least one concrete tower section, the at least one pre-assembly slab (10a, 10b, 10c, 10d, 10e) being modular and comprising at least two modules (11), is carried out for each of the modules (11), in a single phase by means of two molds, as shown in Figure 11, or in two phases by means of one mold, as seen in Figure 12.

In this exemplary embodiment, the substage for hoisting carried out by means of hoisting means of the at least one pre-assembly slab (10a, 10b, 10c, 10d, 10e) of the slab system, of the stage for assembling, comprises a substage for hoisting carried out by means of hoisting means for each of the modules (11) of the at least one pre-assembly slab (10a, 10b, 10c, 10d, 10e), the substage for hoisting preferably being a substage for hoisting at least one of the modules (11) of the at least one pre-assembly slab (10a, 10b, 10c, 10d, 10e) of the pre-assembly slab system in a horizontal position.

In this exemplary embodiment, the stage for assembling the pre-assembly slab system in the vicinity of the wind turbine tower in turn comprises a stage for joining the modules (11) of the at least one pre-assembly slab (10a, 10b, 10c, 10d, 10e) by means of joining means (30) between the modules (11).

The stage for assembling is carried out for each of the pre-assembly slabs (10a , 10b, 10c, 10d, 10e) whether they are modular or not, of the pre-assembly slab system for concrete wind turbine towers in the method for assembling concrete wind turbine towers of the present invention, wherein the slab system comprises as many pre-assembly slabs (10a, 10b, 10c, 10d, 10e) as concrete tower sections less one unit comprised in the concrete tower, since the first concrete tower section is assembled directly on the foundation of the concrete tower of the wind turbine.

The method further comprises a second stage for transporting the pre-assembly slab system prior to the stage for assembling the pre-assembly slab system in the vicinity of the wind turbine tower, wherein this second stage for transporting is preferably a stage for transporting the at least one pre-assembly slab (10a, 10b, 10c, 10d, 10e) by modules (11). This is possible because the dimensions of said modules (11) are smaller than those of the corresponding pre-assembly slab (10a, 10b, 10c, 10d, 10e) and do not exceed the maximum dimensions allowed for transportation by road or rail.

The method further comprises a stage for hoisting carried out by means of hoisting means, of the at least one pre-assembly slab (10a, 10b, 10c, 10d, 10e) of the slab system, prior to the first stage for transporting the pre-assembly slab system to the vicinity of the tower of another wind turbine of the same wind farm or of another wind farm, the stage for hoisting being preferably a stage for hoisting the at least one pre-assembly slab (10a, 10b, 10c, 10d, 10e) of the pre-assembly slab system in a horizontal position.

The stage for precasting at least one pre-assembly slab of at least one concrete tower section comprises the following substages:
- a substage for assembling at least one mold (40), which in turn comprises:
   ∘ a substage for assembling as set of profiles (50) on side faces of the at least one mold (40);
   ∘ a substage for positioning formwork panels, which in turn preferably comprises a substage for applying a stripping material on an inner face of the formwork panels;
   ∘ a substage for assembling a reinforcement (51); and
   ∘ a substage for closing the at least one mold (40) by means of transverse profiles;
- a substage for pouring the material of the pre-assembly slab (10a, 10b, 10c, 10d, 10e) into the at least one mold (40), the pre-assembly slab (10a, 10b, 10c, 10d, 10e) material being preferably concrete.

What follows is a detailed description of the stage for precasting at least one modular pre-assembly slab (10a, 10b, 10c, 10d, 10e) comprising at least two modules (11), which is carried out for each of the modules (11) in a single phase by means of two molds (40), as shown in Figure 11, or in two phases by means of one mold (40), as shown in Figure 12, wherein each of the phases comprises:
- a substage for assembling at least one mold (40), which in turn comprises:
   ∘ a substage for assembling as set of profiles (50) on side faces of the mold or molds (40);
   ∘ a substage for positioning formwork panels, which in turn preferably comprises a substage for applying a stripping material on an inner face of the formwork panels;
   ∘ a substage for assembling a reinforcement (51); and
   ∘ a substage for closing the mold or molds (40) by means of transverse profiles;
- a substage for pouring the material of the pre-assembly slab (10a, 10b, 10c, 10d, 10e) into the mold or molds, preferably concrete.

If the stage for precasting at least one modular pre-assembly slab (10a, 10b, 10c, 10d, 10e) comprising at least two modules (11) is carried out so that the modules (11) are arranged in the final arrangement presented in the pre-assembly slab (10a, 10b, 10c, 10d, 10e), said stage for precasting further comprises:
- a substage for placing joining means (30) between the modules. This ensures the fit of the joining means (30) between the modules in said modules (11) if a single mold is used as shown in Figure 11, shifting the position thereof in order to prefabricate the second mold once the first mold has been prefabricated, or if two molds are used, as shown in Figure 12.

If the stage for precasting at least one modular pre-assembly slab (10a, 10b, 10c, 10d, 10e) comprising at least two modules (11) is not carried out so that the modules (11) are arranged in the final arrangement presented in the pre-assembly slab (10a, 10b, 10c, 10d, 10e), said stage for precasting further comprises:
- a substage for controlling the geometry of the mold or molds prior to the substage of pouring the material of the pre-assembly slab (10a, 10b, 10c, 10d, 10e) in the mold or molds and prior to a
- substage for placing joining means (30) between the modules.

## Claims

1. A pre-assembly slab system for concrete wind turbine towers, wherein the concrete tower comprises at least two tower sections and wherein each of the sections comprises at least two segments, wherein the system comprises at least a first pre-assembly slab (10a) and a second pre-assembly slab (10b), each one of them being configured to support and transmit to a ground stresses associated with at least one concrete tower section of the at least two tower sections, wherein the first pre-assembly slab (10a) and the second pre-assembly slab (10b) are prefabricated;
wherein each of the pre-assembly slabs (10a,10b) comprises a thickness,
**characterized in that** the thickness is less in the first pre-assembly slab (10a) comprising a first contact surface with the ground than the thickness of the second pre-assembly slab (10b) comprising a second contact surface with the ground, the first contact surface being larger than the second contact surface, wherein the first pre-assembly slab (10a) is configured to support and transmit to the ground the stresses associated with a first tower section closer to the base of the tower and the second pre-assembly slab (10b) is configured to support and transmit to the ground the stresses associated with a second tower section further away from the base of the tower than the first tower section.

2. The pre-assembly slab system for concrete wind turbine towers according to claim 1, **characterized in that** the first pre-assembly slab (10a) and the second pre-assembly slab (10b) are configured to be transported.

3. The pre-assembly slab system for concrete wind turbine towers according to any of the preceding claims, **characterized in that** the first pre-assembly slab (10a) and the second pre-assembly slab (10b) are made of concrete, preferably comprising a reinforcement.

4. The pre-assembly slab system for concrete wind turbine towers according to any of the preceding claims, **characterized in that** the first pre-assembly slab (10a) and the second pre-assembly slab (10b) are annular.

5. The pre-assembly slab system for concrete wind turbine towers according to any of the preceding claims, **characterized in that** the first pre-assembly slab (10a) and the second pre-assembly slab (10b) comprise first fastening elements (1) configured to allow each one of the first pre-assembly slab (10a) and the second pre-assembly slab (10b) to be hoisted as a whole, preferably the first fastening elements (1) configured to hold each of the first pre-assembly slab and the second pre-assembly slab in a horizontal position during hoisting.

6. The pre-assembly slab system for concrete wind turbine towers according to any of the preceding claims, **characterized in that** the first pre-assembly slab (10a) and the second pre-assembly slab (10b) are modular, comprising at least two modules (11).

7. The pre-assembly slab system for concrete wind turbine towers according to claim 6, **characterized in that** the first pre-assembly slab (10a) and the second pre-assembly slab (10b) comprise joining means (30) between the modules (11).

8. The pre-assembly slab system for concrete wind turbine towers according to claim 7, **characterized in that** the joining means (30) between the modules (11) comprise joining profiles (31) and steel sheets (32), wherein the joining profiles (31) are joined to a steel sheet (32) arranged on a joining flank (12) of each of the modules (11), and wherein the steel sheets (32) are joined to the modules (11) through inner bars (33) that are embedded in the module (11) once the concrete has set.

9. The pre-assembly slab system for concrete wind turbine towers according to claim 8, **characterized in that** the joining means (30) between the modules (11) further comprise central joining plates (34) arranged between two joining profiles (31) of adjacent modules (11), joining plates (34) that are joined by screws.

10. The pre-assembly slab system for concrete wind turbine towers according to any of claims 8 or 9, **characterized in that** the first pre-assembly slab (10a) and the second pre-assembly slab (10b) comprise second fastening elements (2) configured to allow separate hoisting of each of the modules (11) of the first pre-assembly slab (10a) and the second pre-assembly slab (10b), preferably configured to hold each of the modules (11) in a horizontal position during hoisting.

11. The pre-assembly slab system for concrete wind turbine towers according to any of claims 5 and 10, **characterized in that** the first fastening elements (1) and/or the second fastening elements (2) comprise anchors (3) embedded in the first pre-assembly slab (10a) and in the second pre-assembly slab (10b), the anchors (3) preferably being Halfen-type or the like.

12. The pre-assembly slab system for concrete wind turbine towers according to claim 11, **characterized in that** the first fastening elements (1) and/or the second fastening elements (2) comprise lugs (6) that allow the first pre-assembly slab (10a) and the second pre-assembly slab (10b) or each of the modules (11) of the first pre-assembly slab (10a) and the second pre-assembly slab (10b) respectively to be hoisted.

13. The pre-assembly slab system for concrete wind turbine towers according to claim 1, **characterized in that** each of the first pre-assembly slab (10a) and the second pre-assembly slab (10b) comprises a constant thickness.

14. The pre-assembly slab system for concrete wind turbine towers according to claim 1, **characterized in that** each of the first pre-assembly slab (10a) and the second pre-assembly slab (10b) comprises a size and is made up of an amount of material configured to adapt to the geometry and weight of the section of the at least one concrete tower section arranged on each of the first pre-assembly slab (10a) and the second pre-assembly slab (10b).

15. The pre-assembly slab system for concrete wind turbine towers according to any of the preceding claims, **characterized in that** it further comprises support elements (5) of the sections of the concrete tower configured to be arranged on each of the first pre-assembly slab (10a) and the second pre-assembly slab (10b).

16. A method for assembling a pre-assembly slab system for concrete wind turbine towers according to any of the preceding claims, wherein the concrete tower comprises at least two sections and wherein each of the sections comprises at least two segments, **characterized in that** the method comprises:
a stage for precasting at least the first pre-assembly slab (10a) and the second pre-assembly slab (10b), each of them being configured to support and transmit to the ground the stresses associated with at least one concrete tower section of the at least two tower sections.

17. The method for assembling a pre-assembly slab system according to claim 16, **characterized in that** it further comprises a first stage for transporting the pre-assembly slab system to the vicinity of the tower of another wind turbine of the same wind farm or of another wind farm, since the first pre-assembly slab (10a) and the second pre-assembly slab (10b) are configured to be transported.

18. The method for assembling a pre-assembly slab system according to any of claims 16 or 17, **characterized in that** the stage for precasting the first pre-assembly slab (10a) and the second pre-assembly slab (10b) of the pre-assembly slab system is a stage for precasting by means of concrete laying, preferably by means of concrete laying with a reinforcement.

19. The method for assembling a pre-assembly slab system according to any of claims 16 to 18, **characterized in that** it further comprises a stage for assembling the pre-assembly slab system in the vicinity of the wind turbine tower.

20. The method for assembling a pre-assembly slab system according to claim 19, **characterized in that** the stage for assembling the pre-assembly slab system in the vicinity of the wind turbine tower in turn comprises:
• a substage for hoisting, carried out by means of hoisting means, the first pre-assembly slab (10a) and the second pre-assembly slab (10b) of the pre-assembly slab system, wherein the substage for hoisting is preferably a substage for hoisting the first pre-assembly slab (10a) and the second pre-assembly slab (10b) of the pre-assembly slab system in a horizontal position.

21. The method for assembling a pre-assembly slab system according to any of claims 16 to 20, **characterized in that** the stage for precasting the first pre-assembly slab (10a) and the second pre-assembly slab (10b) of at least one concrete tower section, the first pre-assembly slab (10a) and the second pre-assembly slab (10b) being modular and comprising at least two modules (11), is carried out for each of the modules (11).

22. The method for assembling a pre-assembly slab system according to claims 20 and 21, **characterized in that** the substage for hoisting carried out by means of hoisting means of the first pre-assembly slab (10a) and the second pre-assembly slab (10b) of the slab system, of the stage for assembling, comprises a substage for hoisting, carried out by means of hoisting means, for each of the modules (11) of the first pre-assembly slab and the second pre-assembly slab (10), the substage for hoisting preferably being a substage for hoisting at least one of the modules (11) of the first pre-assembly slab and the second pre-assembly slab (10) of the pre-assembly slab system in a horizontal position.

23. The method for assembling a pre-assembly slab system according to any of claims 21 or 22, **characterized in that** the stage for assembling the pre-assembly slab system in the vicinity of the wind turbine tower in turn comprises a stage for joining the modules (11) of the first pre-assembly slab (10a) and the second pre-assembly slab (10b) by means of joining means (30) between the modules (11).

24. The method for assembling a pre-assembly slab system according to any of claims 19, 20 or 22, **characterized in that** the stage for assembling is carried out for the first pre-assembly slab (10a) and the second pre-assembly slab (10b) of the pre-assembly slab system.

25. The method for assembling a pre-assembly slab system according to claims 19 and 21, **characterized in that** it further comprises a second stage for transporting the pre-assembly slab system prior to the stage for assembling the pre-assembly slab system in the vicinity of the wind turbine tower, wherein this second stage for transporting is a stage for transporting the first pre-assembly slab (10a) and the second pre-assembly slab (10b) by modules (11).

26. The method for assembling a pre-assembly slab system according to claim 17, **characterized in that** it further comprises a stage for hoisting carried out by means of hoisting means, of the first pre-assembly slab (10a) and the second pre-assembly slab (10b) of the slab system, prior to the first stage for transporting the pre-assembly slab system to the vicinity of the tower of another wind turbine of the same wind farm or of another wind farm, the stage for hoisting being preferably a stage for hoisting the first pre-assembly slab (10a) and the second pre-assembly slab (10b) of the pre-assembly slab system in a horizontal position.

27. The method for assembling a pre-assembly slab system according to claim 19, **characterized in that** the stage for assembling the pre-assembly slab system in the vicinity of the wind turbine tower in turn comprises a substage for positioning support elements (5) of the concrete tower sections that are arranged on each of the first pre-assembly slab (10a) and the second pre-assembly slab (10b).

28. The method for assembling a pre-assembly slab system according to claim 16, **characterized in that** the step of precasting at least the first pre-assembly slab (10a) and the second pre-assembly slab (10b) of at least one concrete tower section comprises the following substages:
• a substage for assembling at least one mold (40), which in turn comprises:
∘ at least one substage for assembling a reinforcement (51); and
• a substage for pouring the material of the first pre-assembly slab (10a) or the second pre-assembly slab (10b) into the at least one mold, the first pre-assembly slab (10a) and the second pre-assembly slab (10b) material being preferably concrete.

29. The method for assembling a pre-assembly slab system according to claim 28, **characterized in that** the substage for assembling the at least one mold (40), in turn comprises:
∘ a substage for assembling a set of profiles (50) on side faces of the at least one mold (40);
∘ a substage for positioning formwork panels, which in turn preferably comprises a substage for applying a stripping material on an inner face of the formwork panels; and
∘ a substage for closing the at least one mold (40) by means of transverse profiles.

30. The method for assembling a pre-assembly slab system according to claim 20, **characterized in that** the stage for precasting at least the first pre-assembly slab (10a) and the second pre-assembly slab (10b), each one of them comprising at least two modules (11), is carried out for each of the modules (11) in a single phase by means of two molds (40), or in two phases by means of one mold (40), wherein each of the phases comprises:
• a substage for assembling at least one mold (40), which in turn comprises:
∘ a substage for assembling a set of profiles (50) on side faces of the mold or molds (40);
∘ a substage for positioning formwork panels, which in turn preferably comprises a substage for applying a stripping material on an inner face of the formwork panels;
∘ a substage for assembling a reinforcement (51); and
∘ a substage for closing the mold or molds (40) by means of transverse profiles; and
• a substage for pouring the material of the first pre-assembly slab (10a) or the second pre-assembly slab (10b) into the mold or molds (40), preferably concrete.

31. The method for assembling a pre-assembly slab system according to claim 30, **characterized in that** if the stage for precasting at least the first pre-assembly slab (10a) and the second pre-assembly slab (10b) comprising at least two modules (11) is carried out so that the modules (11) are arranged in the final arrangement presented in the first pre-assembly slab (10a) and the second pre-assembly slab (10b), said stage for precasting further comprises:
• a substage for placing joining means (30) between the modules.

32. The method for assembling a pre-assembly slab system according to claim 30, **characterized in that** if the stage for precasting at least the first pre-assembly slab (10a) and the second pre-assembly slab (10b) comprising at least two modules (11) is not carried out so that the modules (11) are arranged in the final arrangement presented in the first pre-assembly slab (10a) and the second pre-assembly slab (10b), said stage for precasting further comprises:
• a substage for controlling the geometry of the mold or molds (40) prior to the substage for pouring the material of the first pre-assembly slab (10a) and the second pre-assembly slab (10b) in the mold or molds (40), and prior to a
• a substage for placing joining means (30) between the modules.

33. A method for assembling a wind turbine concrete tower comprising the stage for precasting the at least first pre-assembly slab (10a) and second pre-assembly slab (10b) of at least one concrete tower section of the method for assembling a pre-assembly slab system of claim 16, the stage for assembling the slab system in the vicinity of the wind turbine tower of the method for assembling a pre-assembly slab system of claim 18, and further comprises the following stages:
• a stage for placing and positioning at least one subset of a tower section formed by at least two segments on the at least first pre-assembly slab (10a) and second pre-assembly slab (10b);
• a stage for provisional or definite execution of the joints between segments of the at least one subset of the tower section by joining at least two segments; and
• a stage for stacking at least one subset of the tower section onto an immediately lower tower section.

34. A method for assembling a wind farm comprising the stage for precasting at least the first pre-assembly slab (10a) and the second pre-assembly slab (10b) of at least one concrete tower section of the method for assembling the pre-assembly slab system of claim 16, at least one stage for assembling the slab system in the vicinity of the tower of the wind turbine of the method for assembling a pre-assembly slab system of claim 19 and at least one first stage of transporting the pre-assembly slab system to the vicinity of the tower of another wind turbine of the same wind farm of the method for assembling the pre-assembly slab system of claim 17.

35. The method for assembling a wind farm according to claim 34, **characterized in that** it further comprises the followings stages for each of the wind turbine towers of the wind farm:
• a stage for placing and positioning at least one subset of a tower section formed by at least two segments on the at least the first pre-assembly slab (10a) and the second pre-assembly slab (10b);
• a stage for provisional or definite execution of the joints between segments of the at least one subset of the tower section by joining at least two segments; and
• a stage for stacking the at the least one subset of the tower section onto an immediately lower tower section.

## Patentansprüche

1. Vormontageplattensystem für Windturbinenbetontürme, wobei der Betonturm mindestens zwei Turmabschnitte umfasst und wobei jeder der Abschnitte mindestens zwei Segmente umfasst, wobei das System mindestens eine erste Vormontageplatte (10a) und eine zweite Vormontageplatte (10b) umfasst, von denen jede konfiguriert ist, Spannungen, die mindestens einem Betonturmabschnitt der mindestens zwei Turmabschnitte zugeordnet sind, zu stützen und auf einen Boden zu übertragen, wobei die erste Vormontageplatte (10a) und die zweite Vormontageplatte (10b) vorgefertigt sind;
wobei jede der Vormontageplatten (10a, 10b) eine Dicke umfasst,
**dadurch gekennzeichnet, dass**
die Dicke der ersten Vormontageplatte (10a), die eine erste Kontaktfläche mit dem Boden umfasst, geringer ist als die Dicke der zweiten Vormontageplatte (10b), die eine zweite Kontaktfläche mit dem Boden umfasst, wobei die erste Kontaktfläche größer ist als die zweite Kontaktfläche, wobei die erste Vormontageplatte (10a) konfiguriert ist, die Spannungen, die einem ersten Turmabschnitt näher zur Basis des Turms zugeordnet sind, zu stützen und auf den Boden zu übertragen, und die zweite Vormontageplatte (10b) konfiguriert ist, Spannungen, die einem zweiten Turmabschnitt zugeordnet sind, der sich weiter weg von der Basis des Turms als der erste Turmabschnitt befindet, zu stützen und auf den Boden zu übertragen.

2. Vormontageplattensystem für Windturbinenbetontürme nach Anspruch 1, **dadurch gekennzeichnet, dass** die erste Vormontageplatte (10a) und die zweite Vormontageplatte (10b) zum Transport konfiguriert sind.

3. Vormontageplattensystem für Windturbinenbetontürme nach einem der vorhergehenden Ansprüche, **dadurch gekennzeichnet, dass** die erste Vormontageplatte (10a) und die zweite Vormontageplatte (10b) aus Beton gefertigt sind, der vorzugsweise eine Verstärkung umfasst.

4. Vormontageplattensystem für Windturbinenbetontürme nach einem der vorhergehenden Ansprüche, **dadurch gekennzeichnet, dass** die erste Vormontageplatte (10a) und die zweite Vormontageplatte (10b) ringförmig sind.

5. Vormontageplattensystem für Windturbinenbetontürme nach einem der vorhergehenden Ansprüche, **dadurch gekennzeichnet, dass** die erste Vormontageplatte (10a) und die zweite Vormontageplatte (10b) erste Befestigungselemente (1) umfassen, die so konfiguriert sind, dass jede der ersten Vormontageplatte (10a) und der zweiten Vormontageplatte (10b) als Ganzes angehoben werden können, wobei vorzugsweise die ersten Befestigungselemente (1) konfiguriert sind, jede der ersten Vormontageplatte und der zweiten Vormontageplatte während des Hebens in einer horizontalen Position zu halten.

6. Vormontageplattensystem für Windturbinenbetontürme nach einem der vorhergehenden Ansprüche, **dadurch gekennzeichnet, dass** die erste Vormontageplatte (10a) und die zweite Vormontageplatte (10b) modular sind und mindestens zwei Module (11) umfassen.

7. Vormontageplattensystem für Windturbinenbetontürme nach Anspruch 6, **dadurch gekennzeichnet, dass** die erste Vormontageplatte (10a) und die zweite Vormontageplatte (10b) Verbindungsmittel (30) zwischen den Modulen (11) umfassen.

8. Vormontageplattensystem für Windturbinenbetontürme nach Anspruch 7, **dadurch gekennzeichnet, dass** die Verbindungsmittel (30) zwischen den Modulen (11) Verbindungsprofile (31) und Stahlbleche (32) umfassen, wobei die Verbindungsprofile (31) mit einem Stahlblech (32) verbunden sind, das an einer Verbindungsflanke (12) jedes der Module (11) angeordnet ist, und wobei die Stahlbleche (32) mit den Modulen (11) durch innere Stangen (33) verbunden sind, die nach dem Abbinden des Betons in das Modul (11) eingebettet sind.

9. Vormontageplattensystem für Windturbinenbetontürme nach Anspruch 8, **dadurch gekennzeichnet, dass** die Verbindungsmittel (30) zwischen den Modulen (11) ferner zentrale Verbindungsplatten (34) umfassen, die zwischen zwei Verbindungsprofilen (31) benachbarter Module (11) angeordnet sind, wobei die Verbindungsplatten (34) durch Schrauben verbunden sind.

10. Vormontageplattensystem für Windturbinenbetontürme nach einem der Ansprüche 8 oder 9, **dadurch gekennzeichnet, dass** die erste Vormontageplatte (10a) und die zweite Vormontageplatte (10b) zweite Befestigungselemente (2) umfassen, die konfiguriert sind, ein getrenntes Heben jedes der Module (11) der ersten Vormontageplatte (10a) und der zweiten Vormontageplatte (10b) zu ermöglichen, und die vorzugsweise konfiguriert sind, jedes der Module (11) während des Hebens in einer horizontalen Position zu halten.

11. Vormontageplattensystem für Windturbinenbetontürme nach einem der Ansprüche 5 und 10, **dadurch gekennzeichnet, dass** die ersten Befestigungselemente (1) und/oder die zweiten Befestigungselemente (2) Anker (3) umfassen, die in die erste Vormontageplatte (10a) und in die zweite Vormontageplatte (10b) eingebettet sind, wobei die Anker (3) vorzugsweise vom Halfen-Typ oder dergleichen sind.

12. Vormontageplattensystem für Windturbinenbetontürme nach Anspruch 11, **dadurch gekennzeichnet, dass** die ersten Befestigungselemente (1) und/oder die zweiten Befestigungselemente (2) Laschen (6) umfassen, die ermöglichen, dass die erste Vormontageplatte (10a) und die zweite Vormontageplatte (10b) oder jedes der Module (11) der ersten Vormontageplatte (10a) bzw. der zweiten Vormontageplatte (10b) angehoben wird.

13. Vormontageplattensystem für Windturbinenbetontürme nach Anspruch 1, **dadurch gekennzeichnet, dass** jede der ersten Vormontageplatten (10a) und der zweiten Vormontageplatte (10b) eine konstante Dicke umfasst.

14. Vormontageplattensystem für Windturbinenbetontürme nach Anspruch 1, **dadurch gekennzeichnet, dass** jede der ersten Vormontageplatten (10a) und der zweiten Vormontageplatte (10b) eine Größe umfasst und aus einer Materialmenge gefertigt ist, die konfiguriert ist, sich an die Geometrie und das Gewicht des Abschnitts des mindestens einen Betonturmabschnitts anzupassen, der auf der ersten Vormontageplatte (10a) bzw. der zweiten Vormontageplatte (10b) angeordnet ist.

15. Vormontageplattensystem für Windturbinenbetontürme nach einem der vorhergehenden Ansprüche, **dadurch gekennzeichnet, dass** es ferner Stützelemente (5) der Abschnitte des Betonturms umfasst, die konfiguriert sind, auf jeder der ersten Vormontageplatten (10a) und der zweiten Vormontageplatte (10b) angeordnet zu sein.

16. Verfahren zur Montage eines Vormontageplattensystems für Windturbinenbetontürme nach einem der vorhergehenden Ansprüche, wobei der Betonturm mindestens zwei Abschnitte umfasst und wobei jeder der Abschnitte mindestens zwei Segmente umfasst, **dadurch gekennzeichnet, dass** das Verfahren umfasst:
eine Stufe zum Vorfertigen mindestens der ersten Vormontageplatte (10a) und der zweiten Vormontageplatte (10b), wobei jede von ihnen konfiguriert ist, die Spannungen, die mindestens einem Betonturmabschnitt der zwei Turmabschnitte zugeordnet sind, zu stützen und auf den Boden zu übertragen.

17. Verfahren zur Montage eines Vormontageplattensystems nach Anspruch 16, **dadurch gekennzeichnet, dass** es ferner eine erste Stufe zum Transportieren des Vormontageplattensystems in die Nähe des Turms einer anderen Windturbine desselben Windparks oder eines anderen Windparks umfasst, da die erste Vormontageplatte (10a) und die zweite Vormontageplatte (10b) für den Transport konfiguriert sind.

18. Verfahren zur Montage eines Vormontageplattensystems nach einem der Ansprüche 16 oder 17, **dadurch gekennzeichnet, dass** die Stufe zum Vorfertigen der ersten Vormontageplatte (10a) und der zweiten Vormontageplatte (10b) des Vormontageplattensystems eine Stufe zum Vorfertigen mittels Betonverlegung, vorzugsweise mittels Betonverlegung mit einer Verstärkung ist.

19. Verfahren zur Montage eines Vormontageplattensystems nach einem der Ansprüche 16 bis 18, **dadurch gekennzeichnet, dass** es ferner eine Stufe zur Montage des Vormontageplattensystems in der Nähe des Windturbinenturms umfasst.

20. Verfahren zur Montage eines Vormontageplattensystems nach Anspruch 19, **dadurch gekennzeichnet, dass** die Stufe zur Montage des Vormontageplattensystems in der Nähe des Windturbinenturms wiederum umfasst:
• eine Unterstufe zum Heben, die mittels Hebemitteln durchgeführt wird, der ersten Vormontageplatte (10a) und der zweite Vormontageplatte (10b) des Vormontageplattensystems, wobei die Unterstufe zum Heben vorzugsweise eine Unterstufe zum Heben der ersten Vormontageplatte (10a) und der zweiten Vormontageplatte (10b) des Vormontageplattensystems in horizontaler Position ist.

21. Verfahren zur Montage eines Vormontageplattensystems nach einem der Ansprüche 16 bis 20, **dadurch gekennzeichnet, dass** die Stufe zum Vorfertigen der ersten Vormontageplatte (10a) und der zweiten Vormontageplatte (10b) von mindestens einem Betonturmabschnitt, wobei die erste Vormontageplatte (10a) und die zweite Vormontageplatte (10b) modular sind und mindestens zwei Module (11) umfassen, für jedes der Module (11) ausgeführt wird.

22. Verfahren zur Montage eines Vormontageplattensystems nach Anspruch 20 und 21, **dadurch gekennzeichnet, dass** die Unterstufe zum Heben, die mittels Hebemitteln der ersten Vormontageplatte (10a) und der zweiten Vormontageplatte (10b) des Plattensystems durchgeführt wird, der Stufe zur Montage eine Unterstufe zum Heben umfasst, die mittels Hebemitteln für jedes der Module (11) der ersten Vormontageplatte und der zweiten Vormontageplatte (10) durchgeführt wird, wobei die Unterstufe zum Heben vorzugsweise eine Unterstufe zum Heben mindestens eines der Module (11) der ersten Vormontageplatte und der zweiten Vormontageplatte (10) des Vormontageplattensystems in horizontaler Position ist.

23. Verfahren zur Montage eines Vormontageplattensystems nach einem der Ansprüche 21 oder 22, **dadurch gekennzeichnet, dass** die Stufe zur Montage des Vormontageplattensystems in der Nähe des Windturbinenturms wiederum eine Stufe zum Verbinden der Module (11) der ersten Vormontageplatte (10a) und der zweiten Vormontageplatte (10b) mittels Verbindungsmitteln (30) zwischen den Modulen (11) umfasst.

24. Verfahren zur Montage eines Vormontageplattensystems nach einem der Ansprüche 19, 20 oder 22, **dadurch gekennzeichnet, dass** die Stufe zur Montage für die erste Vormontageplatte (10a) und die zweite Vormontageplatte (10b) des Vormontageplattensystems durchgeführt wird.

25. Verfahren zur Montage eines Vormontageplattensystems nach Anspruch 19 und 21, **dadurch gekennzeichnet, dass** es ferner eine zweite Stufe zum Transport des Vormontageplattensystems vor der Stufe zur Montage des Vormontageplattensystems in der Nähe des Windturbinenturms umfasst, wobei diese zweite Stufe zum Transportieren eine Stufe zum Transportieren der ersten Vormontageplatte (10a) und der zweiten Vormontageplatte (10b) durch Module (11) ist.

26. Verfahren zur Montage eines Vormontageplattensystems nach Anspruch 17, **dadurch gekennzeichnet, dass** es ferner eine Stufe zum Heben, die mittels Hebemitteln durchgeführt wird, der ersten Vormontageplatte (10a) und der zweiten Vormontageplatte (10b) des Plattensystems vor der ersten Stufe zum Transportieren das Vormontageplattensystem in die Nähe des Turms einer anderen Windturbine desselben Windparks oder eines anderen Windparks umfasst, wobei die Stufe zum Heben vorzugsweise eine Stufe zum Heben der ersten Vormontageplatte (10a) und der zweiten Vormontageplatte (10b) des Vormontageplattensystems in horizontaler Position ist.

27. Verfahren zur Montage eines Vormontageplattensystems nach Anspruch 19, **dadurch gekennzeichnet, dass** die Stufe zur Montage des Vormontageplattensystems in der Nähe des Windturbinenturms wiederum eine Unterstufe zum Positionieren von Stützelementen (5) der Betonturmabschnitte umfasst, die auf jeder der ersten Vormontageplatte (10a) und der zweiten Vormontageplatte (10b) angeordnet sind.

28. Verfahren zur Montage eines Vormontageplattensystems nach Anspruch 16, **dadurch gekennzeichnet, dass** der Schritt des Vorfertigens mindestens der ersten Vormontageplatte (10a) und der zweiten Vormontageplatte (10b) von mindestens einem Betonturmabschnitt die folgenden Unterstufen umfasst:
• eine Unterstufe zur Montage mindestens einer Form (40), die wiederum umfasst: ° mindestens eine Unterstufe zur Montage einer Verstärkung (51); und
• eine Unterstufe zum Gießen des Materials der ersten Vormontageplatte (10a) oder der zweiten Vormontageplatte (10b) in die mindestens eine Form, wobei das Material der ersten Vormontageplatte (10a) und der zweiten Vormontageplatte (10b) vorzugsweise Beton ist.

29. Verfahren zur Montage eines Vormontageplattensystems nach Anspruch 28, **dadurch gekennzeichnet, dass** die Unterstufe zur Montage der mindestens einen Form (40) wiederum umfasst:
∘ eine Unterstufe zur Montage eines Satzes von Profilen (50) an Seitenflächen der mindestens einen Form (40);
∘ eine Unterstufe zum Positionieren von Schalungspaneelen, die wiederum vorzugsweise eine Unterstufe zum Aufbringen eines Abisoliermaterials auf eine Innenfläche der Schalungspaneele umfasst; und
∘ eine Unterstufe zum Verschließen der mindestens einen Form (40) mittels Querprofilen.

30. Verfahren zur Montage eines Vormontageplattensystems nach Anspruch 20, **dadurch gekennzeichnet, dass** die Stufe zum Vorfertigen mindestens der ersten Vormontageplatte (10a) und der zweiten Vormontageplatte (10b), von denen jedes mindestens zwei Module (11) umfasst, für jedes der Module (11) in einer einzigen Phase mittels zweier Formen (40) oder in zwei Phasen mittels einer Form (40) durchgeführt wird, wobei jede der Phasen umfasst:
• eine Unterstufe zur Montage mindestens einer Form (40), die wiederum umfasst:
∘ eine Unterstufe zur Montage eines Satzes von Profilen (50) an Seitenflächen der Form oder Formen (40);
∘ eine Unterstufe zum Positionieren von Schalungspaneelen, die wiederum vorzugsweise eine Unterstufe zum Aufbringen eines Abisoliermaterials auf eine Innenfläche der Schalungspaneele umfasst;
∘ eine Unterstufe zur Montage einer Verstärkung (51); und
∘ eine Unterstufe zum Verschließen der Form oder Formen (40) mittels Querprofilen; und
• eine Unterstufe zum Gießen des Materials der ersten Vormontageplatte (10a) oder der zweiten Vormontageplatte (10b) in die Form oder Formen (40), vorzugsweise Beton.

31. Verfahren zur Montage eines Vormontageplattensystems nach Anspruch 30, **dadurch gekennzeichnet, dass**, wenn die Stufe zum Vorfertigen mindestens der ersten Vormontageplatte (10a) und der zweiten Vormontageplatte (10b), die mindestens zwei Module (11) umfassen, derart durchgeführt wird, dass die Module (11) in der Endanordnung angeordnet werden, die in der ersten Vormontageplatte (10a) und der zweiten Vormontageplatte (10b) dargestellt ist, wobei die Stufe zum Vorfertigen ferner umfasst:
• eine Unterstufe zum Platzieren von Verbindungsmitteln (30) zwischen den Modulen.

32. Verfahren zur Montage eines Vormontageplattensystems nach Anspruch 30, **dadurch gekennzeichnet, dass**, wenn die Stufe zum Vorfertigen mindestens der ersten Vormontageplatte (10a) und der zweiten Vormontageplatte (10b), die mindestens zwei Module (11) umfassen, nicht derart ausgeführt wird, dass die Module (11) in der Endanordnung angeordnet sind, die in der ersten Vormontageplatte (10a) und der zweiten Vormontageplatte (10b) dargestellt ist, wobei die Stufe zum Vorfertigen ferner umfasst:
• eine Unterstufe zum Steuern der Geometrie der Form oder Formen (40) vor der Unterstufe zum Gießen des Materials der ersten Vormontageplatte (10a) und der zweiten Vormontageplatte (10b) in die Form oder Formen (40) und vor
• eine Unterstufe zum Platzieren von Verbindungsmitteln (30) zwischen den Modulen.

33. Verfahren zur Montage eines Windturbinenbetonturms, umfassend die Stufe zum Vorfertigen der mindestens ersten Vormontageplatte (10a) und der zweiten Vormontageplatte (10b) von mindestens einem Betonturmabschnitt des Verfahrens zur Montage eines Vormontageplattensystems nach Anspruch 16, die Stufe zur Montage des Plattensystems in der Nähe des Windturbinenturms des Verfahrens zur Montage eines Vormontageplattensystems nach Anspruch 18, und ferner die folgenden Stufen umfasst:
• eine Stufe zum Platzieren und Positionieren mindestens einer Teilmenge eines Turmabschnitts, der aus mindestens zwei Segmenten gebildet ist, auf der mindestens ersten Vormontageplatte (10a) und der zweiten Vormontageplatte (10b);
• eine Stufe für die vorläufige oder endgültige Ausführung der Verbindungen zwischen Segmenten der mindestens einen Teilmenge des Turmabschnitts durch Verbinden von mindestens zwei Segmenten; und
• eine Stufe zum Stapeln mindestens einer Teilmenge des Turmabschnitts auf einen unmittelbar unteren Turmabschnitt.

34. Verfahren zur Montage eines Windparks, umfassend die Stufe zum Vorfertigen mindestens der ersten Vormontageplatte (10a) und der zweiten Vormontageplatte (10b) von mindestens einem Betonturmabschnitt des Verfahrens zur Montage des Vormontageplattensystems nach Anspruch 16, mindestens eine Stufe zur Montage des Plattensystems in der Nähe des Turms der Windturbine nach dem Verfahren zur Montage eines Vormontageplattensystems nach Anspruch 19 und mindestens eine erste Stufe zum Transportieren des Vormontageplattensystems in die Nähe des Turms einer anderen Windturbine desselben Windparks nach dem Verfahren zur Montage des Vormontageplattensystems nach Anspruch 17.

35. Verfahren zur Montage eines Windparks nach Anspruch 34, **dadurch gekennzeichnet, dass** es ferner die folgenden Stufen für jeden der Windturbinentürme des Windparks umfasst:
• eine Stufe zum Platzieren und Positionieren mindestens einer Teilmenge eines Turmabschnitts, der aus mindestens zwei Segmenten gebildet ist, auf der mindestens ersten Vormontageplatte (10a) und der zweiten Vormontageplatte (10b);
• eine Stufe für die vorläufige oder endgültige Ausführung der Verbindungen zwischen Segmenten der mindestens einen Teilmenge des Turmabschnitts durch Verbinden von mindestens zwei Segmenten; und
• eine Stufe zum Stapeln der mindestens einen Teilmenge des Turmabschnitts auf einen unmittelbar unteren Turmabschnitt.

## Revendications

1. Système de dalles de pré-assemblage pour tours d'éoliennes en béton, dans lequel la tour en béton comprend au moins deux sections de tour et dans lequel chacune des sections comprend au moins deux segments, dans lequel le système comprend au moins une première dalle de pré-assemblage (10a) et une deuxième dalle de pré-assemblage (10b), chacune d'elles étant configurée pour supporter et transmettre à un sol des contraintes associées à au moins une section de tour en béton des au moins deux sections de tour, dans lequel la première dalle de pré-assemblage (10a) et la deuxième dalle de pré-assemblage (10b) sont préfabriquées ;
dans lequel chacune des dalles de pré-assemblage (10a, 10b) comprend une épaisseur,
**caractérisé en ce que**
l'épaisseur est plus petite dans la première dalle de pré-assemblage (10a) comprenant une première surface de contact avec le sol que l'épaisseur de la deuxième dalle de pré-assemblage (10b) comprenant une deuxième surface de contact avec le sol, la première surface de contact étant plus grande que la deuxième surface de contact, dans lequel la première dalle de pré-assemblage (10a) est configurée pour supporter et transmettre au sol les contraintes associées à une première section de tour plus proche de la base de la tour et la deuxième dalle de pré-assemblage (10b) est configurée pour supporter et transmettre au sol les contraintes associées à une deuxième section de tour plus éloignée de la base de la tour que la première section de tour.

2. Système de dalles de pré-assemblage pour tours d'éoliennes en béton selon la revendication 1, **caractérisé en ce que** la première dalle de pré-assemblage (10a) et la deuxième dalle de pré-assemblage (10b) sont configurées pour être transportées.

3. Système de dalles de pré-assemblage pour tours d'éoliennes en béton selon l'une quelconque des revendications précédentes, **caractérisé en ce que** la première dalle de pré-assemblage (10a) et la deuxième dalle de pré-assemblage (10b) sont faites en béton, comprenant de préférence un renfort.

4. Système de dalles de pré-assemblage pour tours d'éoliennes en béton selon l'une quelconque des revendications précédentes, **caractérisé en ce que** la première dalle de pré-assemblage (10a) et la deuxième dalle de pré-assemblage (10b) sont annulaires.

5. Système de dalles de pré-assemblage pour tours d'éoliennes en béton selon l'une quelconque des revendications précédentes, **caractérisé en ce que** la première dalle de pré-assemblage (10a) et la deuxième dalle de pré-assemblage (10b) comprennent des premiers éléments de fixation (1) configurés pour permettre à chacune de la première dalle de pré-assemblage (10a) et de la deuxième dalle de pré-assemblage (10b) d'être levées dans leur ensemble, de préférence les premiers éléments de fixation (1) configurés pour maintenir chacune parmi la première dalle de pré-assemblage et la deuxième dalle de pré-assemblage dans une position horizontale pendant le levage.

6. Système de dalles de pré-assemblage pour tours d'éoliennes en béton selon l'une quelconque des revendications précédentes, **caractérisé en ce que** la première dalle de pré-assemblage (10a) et la deuxième dalle de pré-assemblage (10b) sont modulaires, comprenant au moins deux modules (11).

7. Système de dalles de pré-assemblage pour tours d'éoliennes en béton selon la revendication 6, **caractérisé en ce que** la première dalle de pré-assemblage (10a) et la deuxième dalle de pré-assemblage (10b) comprennent des moyens de jonction (30) entre les modules (11).

8. Système de dalles de pré-assemblage pour tours d'éoliennes en béton selon la revendication 7, **caractérisé en ce que** les moyens de jonction (30) entre les modules (11) comprennent des profilés de jonction (31) et des tôles d'acier (32), dans lequel les profilés de jonction (31) sont joints à une tôle d'acier (32) disposée sur un flanc de jonction (12) de chacun des modules (11), et dans lequel les tôles d'acier (32) sont jointes aux modules (11) par des barres internes (33) qui sont incorporées dans le module (11) une fois que le béton a pris.

9. Système de dalles de pré-assemblage pour tours d'éoliennes en béton selon la revendication 8, **caractérisé en ce que** les moyens de jonction (30) entre les modules (11) comprennent en outre des plaques de jonction centrales (34) disposées entre deux profilés de jonction (31) de modules adjacents (11), des plaques de jonction (34) qui sont jointes par des vis.

10. Système de dalles de pré-assemblage pour tours d'éoliennes en béton selon l'une quelconque des revendications 8 ou 9, **caractérisé en ce que** la première dalle de pré-assemblage (10a) et la deuxième dalle de pré-assemblage (10b) comprennent des deuxièmes éléments de fixation (2) configurés pour permettre le levage séparé de chacun des modules (11) de la première dalle de pré-assemblage (10a) et de la deuxième dalle de pré-assemblage (10b), de préférence configurés pour maintenir chacun des modules (11) dans une position horizontale pendant le levage.

11. Système de dalles de pré-assemblage pour tours d'éoliennes en béton selon l'une quelconque des revendications 5 et 10, **caractérisé en ce que** les premiers éléments de fixation (1) et/ou les deuxièmes éléments de fixation (2) comprennent des ancrages (3) incorporés dans la première dalle de pré-assemblage (10a) et dans la deuxième dalle de pré-assemblage (10b), les ancrages (3) étant de préférence du type Halfen ou analogue.

12. Système de dalles de pré-assemblage pour tours d'éoliennes en béton selon la revendication 11, **caractérisé en ce que** les premiers éléments de fixation (1) et/ou les deuxièmes éléments de fixation (2) comprennent des tenons (6) qui permettent à la première dalle de pré-assemblage (10a) et à la deuxième dalle de pré-assemblage (10b) ou à chacun des modules (11) de la première dalle de pré-assemblage (10a) et de la deuxième dalle de pré-assemblage (10b) d'être levées respectivement.

13. Système de dalles de pré-assemblage pour tours d'éoliennes en béton selon la revendication 1, **caractérisé en ce que** chacune parmi la première dalle de pré-assemblage (10a) et la deuxième dalle de pré-assemblage (10b) comprend une épaisseur constante.

14. Système de dalles de pré-assemblage pour tours d'éoliennes en béton selon la revendication 1, **caractérisé en ce que** chacune de la première dalle de pré-assemblage (10a) et de la deuxième dalle de pré-assemblage (10b) comprend une taille et est constituée d'une quantité de matériau configurée pour s'adapter à la géométrie et au poids de la section de l'au moins une section de tour en béton disposée sur chacune parmi la première dalle de pré-assemblage (10a) et la deuxième dalle de pré-assemblage (10b).

15. Système de dalles de pré-assemblage pour tours d'éoliennes en béton selon l'une quelconque des revendications précédentes, **caractérisé en ce qu'**il comprend en outre des éléments de support (5) des sections de la tour en béton configurés pour être disposés sur chacune parmi la première dalle de pré-assemblage (10a) et la deuxième dalle de pré-assemblage (10b).

16. Procédé d'assemblage d'un système de dalles de pré-assemblage pour tours d'éoliennes en béton selon l'une quelconque des revendications précédentes, dans lequel la tour en béton comprend au moins deux sections et dans lequel chacune des sections comprend au moins deux segments, **caractérisé en ce que** le procédé comprend :
une étape de préfabrication d'au moins la première dalle de pré-assemblage (10a) et de la deuxième dalle de pré-assemblage (10b), chacune d'elles étant configurée pour supporter et transmettre au sol les contraintes associées à au moins une section de tour en béton des au moins deux sections de tour.

17. Procédé d'assemblage d'un système de dalles de pré-assemblage selon la revendication 16, **caractérisé en ce qu'**il comprend en outre une première étape de transport du système de dalles de pré-assemblage à proximité de la tour d'une autre éolienne du même parc éolien ou d'un autre parc éolien, puisque la première dalle de pré-assemblage (10a) et la deuxième dalle de pré-assemblage (10b) sont configurées pour être transportées.

18. Procédé d'assemblage d'un système de dalles de pré-assemblage selon l'une quelconque des revendications 16 ou 17, **caractérisé en ce que** l'étape de préfabrication de la première dalle de pré-assemblage (10a) et de la deuxième dalle de pré-assemblage (10b) du système de dalles de pré-assemblage est une étape de préfabrication par le biais de pose de béton, de préférence par le biais de pose de béton avec un renfort.

19. Procédé d'assemblage d'un système de dalles de pré-assemblage selon l'une quelconque des revendications 16 à 18, **caractérisé en ce qu'**il comprend en outre une étape d'assemblage du système de dalles de pré-assemblage à proximité de la tour d'éolienne.

20. Procédé d'assemblage d'un système de dalles de pré-assemblage selon la revendication 19, **caractérisé en ce que** l'étape d'assemblage du système de dalles de pré-assemblage à proximité de la tour d'éolienne comprend à son tour :
• une sous-étape de levage, mise en œuvre par le biais de moyens de levage, la première dalle de pré-assemblage (10a) et la deuxième dalle de pré-assemblage (10b) du système de dalles de pré-assemblage, dans lequel la sous-étape de levage est de préférence une sous-étape de levage de la première dalle de pré-assemblage (10a) et de la deuxième dalle de pré-assemblage (10b) du système de dalles de pré-assemblage dans une position horizontale.

21. Procédé d'assemblage d'un système de dalles de pré-assemblage selon l'une quelconque des revendications 16 à 20, **caractérisé en ce que** l'étape de préfabrication de la première dalle de pré-assemblage (10a) et de la deuxième dalle de pré-assemblage (10b) d'au moins une section de tour en béton, la première dalle de pré-assemblage (10a) et la deuxième dalle de pré-assemblage (10b) étant modulaires et comprenant au moins deux modules (11), est mise en œuvre pour chacun des modules (11).

22. Procédé d'assemblage d'un système de dalles de pré-assemblage selon les revendications 20 et 21, **caractérisé en ce que** la sous-étape de levage mise en œuvre par le biais de moyens de levage de la première dalle de pré-assemblage (10a) et de la deuxième dalle de pré-assemblage (10b) du système de dalle, de l'étape d'assemblage, comprend une sous-étape de levage, mise en œuvre par le biais de moyens de levage, pour chacun des modules (11) de la première dalle de pré-assemblage et de la deuxième dalle de pré-assemblage (10), la sous-étape de levage étant de préférence une sous-étape de levage d'au moins un des modules (11) de la première dalle de pré-assemblage et de la deuxième dalle de pré-assemblage (10) du système de dalles de pré-assemblage dans une position horizontale.

23. Procédé d'assemblage d'un système de dalles de pré-assemblage selon l'une quelconque des revendications 21 ou 22, **caractérisé en ce que** l'étage d'assemblage du système de dalles de pré-assemblage à proximité de la tour d'éolienne comprend à son tour une étape de jonction des modules (11) de la première dalle de pré-assemblage (10a) et de la deuxième dalle de pré-assemblage (10b) par le biais de moyens de jonction (30) entre les modules (11).

24. Procédé d'assemblage d'un système de dalles de pré-assemblage selon l'une quelconque des revendications 19, 20 ou 22, **caractérisé en ce que** l'étape d'assemblage est mise en œuvre pour la première dalle de pré-assemblage (10a) et la deuxième dalle de pré-assemblage (10b) du système de dalles de pré-assemblage.

25. Procédé d'assemblage d'un système de dalles de pré-assemblage selon les revendications 19 et 21, **caractérisé en ce qu'**il comprend en outre une deuxième étape de transport du système de dalles de pré-assemblage avant l'étape d'assemblage du système de dalles de pré-assemblage à proximité de la tour d'éolienne, dans lequel cette deuxième étape de transport est une étape de transport de la première dalle de pré-assemblage (10a) et de la deuxième dalle de pré-assemblage (10b) par modules (11).

26. Procédé d'assemblage d'un système de dalles de pré-assemblage selon la revendication 17, **caractérisé en ce qu'**il comprend en outre une étape de levage mise en œuvre par le biais de moyens de levage, de la première dalle de pré-assemblage (10a) et de la deuxième dalle de pré-assemblage (10b) du système de dalles, avant la première étape de transport du système de dalles de pré-assemblage à proximité de la tour d'une autre éolienne du même parc éolien ou d'un autre parc éolien, l'étape de levage étant de préférence une étape de levage de la première dalle de pré-assemblage (10a) et de la deuxième dalle de pré-assemblage (10b) du système de dalles de pré-assemblage dans une position horizontale.

27. Procédé d'assemblage d'un système de dalles de pré-assemblage selon la revendication 19, **caractérisé en ce que** l'étape d'assemblage du système de dalles de pré-assemblage à proximité de la tour d'éolienne comprend à son tour une sous-étape de positionnement d'éléments de support (5) des sections de tour en béton qui sont disposés sur chacune parmi la première dalle de pré-assemblage (10a) et la deuxième dalle de pré-assemblage (10b).

28. Procédé d'assemblage d'un système de dalles de pré-assemblage selon la revendication 16, **caractérisé en ce que** l'étape de préfabrication d'au moins la première dalle de pré-assemblage (10a) et la deuxième dalle de pré-assemblage (10b) d'au moins une section de tour en béton comprend les sous-étapes suivantes :
• une sous-étape d'assemblage d'au moins un moule (40), qui comprend à son tour :
∘ au moins une sous-étape d'assemblage d'un renfort (51) ; et
• une sous-étape de coulage du matériau de la première dalle de pré-assemblage (10a) ou de la deuxième dalle de pré-assemblage (10b) dans l'au moins un moule, la première dalle de pré-assemblage (10a) et la deuxième dalle de pré-assemblage (10b) étant de préférence du béton.

29. Procédé d'assemblage d'un système de dalles de pré-assemblage selon la revendication 28, **caractérisé en ce que** la sous-étape d'assemblage de l'au moins un moule (40), comprend à son tour :
° une sous-étape d'assemblage d'un ensemble de profilés (50) sur les faces latérales de l'au moins un moule (40) ;
° une sous-étape de positionnement de panneaux de coffrage, qui comprend à son tour de préférence une sous-étape d'application d'un matériau de décapage sur une face interne des panneaux de coffrage ; et
∘ une sous-étape de fermeture de l'au moins un moule (40) par le biais de profilés transversaux.

30. Procédé d'assemblage d'un système de dalles de pré-assemblage selon la revendication 20, **caractérisé en ce que** l'étape de préfabrication d'au moins la première dalle de pré-assemblage (10a) et la deuxième dalle de pré-assemblage (10b), chacune d'elles comprenant au moins deux modules (11), est mise en œuvre pour chacun des modules (11) en une seule phase par le biais de deux moules (40), ou en deux phases par le biais d'un moule (40), dans lequel chacune des phases comprend :
• une sous-étape d'assemblage d'au moins un moule (40), qui comprend à son tour :
∘ une sous-étape d'assemblage d'un ensemble de profilés (50) sur les faces latérales du ou des moules (40) ;
∘ une sous-étape de positionnement de panneaux de coffrage, qui comprend à son tour de préférence une sous-étape d'application d'un matériau de décapage sur une face interne des panneaux de coffrage ;
∘ une sous-étape d'assemblage d'un renfort (51); et
∘ une sous-étape de fermeture du ou des moules (40) par le biais de profilés transversaux ; et
• une sous-étape de coulage du matériau de la première dalle de pré-assemblage (10a) ou de la deuxième dalle de pré-assemblage (10b) dans le ou les moules (40), de préférence en béton.

31. Procédé d'assemblage d'un système de dalles de pré-assemblage selon la revendication 30, **caractérisé en ce que** si l'étape de préfabrication d'au moins la première dalle de pré-assemblage (10a) et la deuxième dalle de pré-assemblage (10b) comprenant au moins deux modules (11) est mise en œuvre de sorte que les modules (11) soient disposés dans la disposition finale présentée dans la première dalle de pré-assemblage (10a) et la deuxième dalle de pré-assemblage (10b), ladite étape de préfabrication comprend en outre :
• une sous-étape de mise en place de moyens de jonction (30) entre les modules.

32. Procédé d'assemblage d'un système de dalles de pré-assemblage selon la revendication 30, **caractérisé en ce que** si l'étape de préfabrication d'au moins la première dalle de pré-assemblage (10a) et la deuxième dalle de pré-assemblage (10b) comprenant au moins deux modules (11) n'est pas mise en œuvre de sorte que les modules (11) soient disposés dans la disposition finale présentée dans la première dalle de pré-assemblage (10a) et la deuxième dalle de pré-assemblage (10b), ladite étape de préfabrication comprend en outre :
• une sous-étape de contrôle de la géométrie du ou des moules (40) avant la sous-étape de coulage du matériau de la première dalle de pré-assemblage (10a) et de la deuxième dalle de pré-assemblage (10b) dans le ou les moules (40), et avant une
• une sous-étape de mise en place de moyens de jonction (30) entre les modules.

33. Procédé d'assemblage d'une tour en béton d'éolienne comprenant l'étape de préfabrication d'au moins la première dalle de pré-assemblage (10a) et de la deuxième dalle de pré-assemblage (10b) d'au moins une section de tour en béton du procédé d'assemblage d'un système de dalles de pré-assemblage de la revendication 16, l'étape d'assemblage du système de dalles à proximité de la tour d'éolienne du procédé d'assemblage d'un système de dalles de pré-assemblage selon la revendication 18, et comprend en outre les étapes suivantes :
• une étape de mise en place et de positionnement d'au moins un sous-ensemble d'une section de tour formée d'au moins deux segments sur au moins la première dalle de pré-assemblage (10a) et la deuxième dalle de pré-assemblage (10b) ;
• une étape d'exécution provisoire ou définitive des joints entre segments de l'au moins un sous-ensemble de la section de tour en joignant au moins deux segments ; et
• une étape d'empilement d'au moins un sous-ensemble de la section de tour sur une section de tour immédiatement inférieure.

34. Procédé d'assemblage d'un parc éolien comprenant l'étape de préfabrication d'au moins la première dalle de pré-assemblage (10a) et de la deuxième dalle de pré-assemblage (10b) d'au moins une section de tour en béton du procédé d'assemblage d'un système de dalles de pré-assemblage de la revendication 16, au moins une étape d'assemblage du système de dalles à proximité de la tour de l'éolienne du procédé d'assemblage d'un système de dalles de pré-assemblage selon la revendication 19 et au moins une première étape de transport du système de dalles de pré-assemblage à proximité de la tour d'une autre éolienne du même parc éolien du procédé d'assemblage du système de dalles de pré-assemblage selon la revendication 17.

35. Procédé d'assemblage d'un parc éolien selon la revendication 34, **caractérisé en ce qu'**il comprend en outre les étapes suivantes pour chacune des tours d'éoliennes du parc éolien :
• une étape de mise en place et de positionnement d'au moins un sous-ensemble d'une section de tour formée d'au moins deux segments sur l'au moins la première dalle de pré-assemblage (10a) et la deuxième dalle de pré-assemblage (10b) ;
• une étape d'exécution provisoire ou définitive des joints entre segments de l'au moins un sous-ensemble de la section de tour en joignant au moins deux segments ; et
• une étape d'empilement de l'au moins un sous-ensemble de la section de tour sur une section de tour immédiatement inférieure.
